# EUROPEAN PATENT APPLICATION

(11) **EP 3 862 217 A1**
(43) Date of publication of application: **11.08.2021**
(21) Application number: 20155302.1
(22) Date of filing: 04.02.2020
(51) Int. Cl.: B60L 53/65, B60L 53/66, B60L 53/67, B60L 53/68

(54) **CHARGING SYSTEM FOR ELECTRIC VEHICLES**

(71) Applicant: Qwello GmbH, 80992 München (DE)
(72) Inventor: THIELE, Henrik, 80992 München (DE)
(74) Representative: Grünecker Patent- und Rechtsanwälte PartG mbB

(57) **Abstract**

The present invention relates to charging systems for electric vehicles, and in particular to a charging system with a plurality of charging stations connected to a common backend server. Each charging station is provided with a vehicle detector and transmits an arrival notification to the backend server when a vehicle arrives at the charging station. Each user who wants to charge a vehicle, transmits a charging request to the backend server by means of an application program running on a mobile terminal. By correlating the arrival notifications and the charging requests in time, the backend server can associate the charging request to the correct charging station without requiring the user to enter a globally unique identifier of the desired charging station.

## Description

The present invention relates to a charging system for electric vehicles (EVs) and a corresponding method, and in particular to a charging system with a plurality of charging stations connected to a common backend server.

### BACKGROUND OF THE INVENTION

A conventional charging system may comprise a plurality of individual charging stations that are distributed all over a certain area, such as a parking lot, a city, a district, a country, etc., but are operated by a common operator. Such a charging system may also comprise a server for authentication, authorization and accounting (AAA server) so that users may freely choose either one of the charging stations for charging their electric vehicles without having to pay on the spot for each individual charging operation. To this end, users that have pre-registered with the operator of the charging system may authenticate themselves at one of the charging stations and charge their vehicles without the need of any immediate settlement.

While user authentication may generally be performed with specialized hardware, such as a card reader, integrated into each charging station, it may be preferable to employ a web-based authentication method that relies on an application program on the user's mobile terminal, i.e., a smartphone app, that exchanges authentication information with the operator's AAA server rather than with the charging station. For accounting purposes, it is indispensable to associate the successfully authenticated and authorized user with the correct charging station. Conventional charging systems thus require the users to transmit, together with their authentication information, a unique identifier of the desired charging station. This, however, poses a significant burden on the user, who has to get out of the car, walk over to the charging station, search for a label with the lengthy identifier and type same into the appropriate field of the application program.

### SUMMARY OF THE INVENTION

Although the above process can be simplified, for instance, by using a QR-code instead of a alpha-numerical identifier, there is still room for improvement.

It is thus an object of the present invention to provide an improved charging system and a corresponding method, and in particular a charging system and method that requires less user interaction.

This is achieved by the features as set forth in the independent claims. Preferred embodiments are the subject matter of the dependent claims.

It is the particular approach of the present invention to associate each user with the correct charging station on the basis of a temporal correlation between a charging request received from the user's mobile terminal and a signal indicating that a vehicle has arrived at one of the plurality of charging stations. In this manner, there is no need for the users to provide additional information for identifying the correct charging station when using their mobile terminals for initiating the charging process.

According to a first aspect of the invention, a charging system for electric vehicles with a plurality of charging stations and a server is provided. Each charging station comprises a power source for providing electric power to a vehicle; a vehicle detector for detecting whether a vehicle has arrived at the charging station; and a controller configured to transmit an arrival notification to the server when the vehicle detector has detected that a vehicle has arrived at the charging station, and to enable charging of the vehicle with electric power provided by the power source in response to an enabling command received from the server. The server is configured to receive arrival notifications from the plurality of charging stations indicating that a vehicle has arrived at the respective charging station; to receive a charging request from a user's mobile terminal indicating that the user intends to use one of the plurality of charging stations; to identify a desired charging station among the plurality of charging stations on the basis of a temporal correlation between receiving the charging request and receiving the arrival notifications; and to enable charging of the arrived vehicle at the desired charging station.

The server is preferably configured to identify the desired charging station on the basis of the temporal correlation by identifying a charging station as the desired charging station, if said charging station has transmitted an arrival notification within a predefined time window relative to a point in time at which the charging request was received.

In a preferred embodiment, the server is further configured to receive location information from the user's mobile terminal; to store location information indicating a location of each charging station; and to identify the desired charging station among the plurality of charging stations on the basis of said temporal correlation and on the basis of a spatial correlation between the received location information and the stored location information. In this manner, the number of candidate charging stations and the probability of erroneously associating a charging request with the wrong charging station may be reduced.

Here, he server is preferably configured to identify the desired charging station on the basis of the spatial correlation by identifying a charging station as the desired charging station if said charging station is located within a predefined distance from a location indicated by the received location information. Further, arrival notifications received from charging stations that are located at a location that is not spatially correlated with the location indicated by the received location information may be neglected.

In another preferred embodiment, the server is further configured to identify one or more candidate charging stations on the basis of a temporal correlation between receiving the charging request and receiving the arrival notifications; to identify, if exactly one candidate charging station has been determined, the candidate charging station as the desired charging station; and if more than one candidate charging stations have been determined, to prompt the user to transmit, via the user's mobile terminal, an identifier of a charging station and to identify the thus identified charging station as the desired charging station. In this manner, any remaining ambiguities in the mapping between charging requests and charging stations may be eliminated.

Further, the server is preferably configured to generate, for each candidate charging station, a temporary identifier that uniquely identifies the respective charging station among the candidate charging stations; to transmit each temporary identifier to the respective candidate charging station; to prompt each candidate charging station to display its temporary identifier; wherein the desired charging station is identified on the basis of its temporary identifier. With this approach, comparatively short identifiers can be used for resolving any remaining ambiguities. Using short identifiers, such as three-letter codes, is significantly more user friendly than forcing the user to enter a lengthy, globally unique identifier of the charging station into the application program.

Generally, the server may receive charging requests from a plurality of mobile terminals and may have to identify a desired charging station for each of the received charging requests. However, if a unique charging station cannot be identified for at least one of the charging requests, the server may be further configured to identify a plurality of candidate charging stations for said at least one charging request, to generate, for each candidate charging station, a temporary identifier that uniquely identifies the respective charging station among the candidate charging stations, to transmit each temporary identifier to the respective candidate charging station, to prompt each candidate charging station to display its temporary identifier, to prompt each user who transmitted one of said at least one charging requests to transmit, via the user's mobile terminal, one of said temporary identifiers and to identify the thus identified candidate charging station as the desired charging station for said charging request. The approach based on short, temporary identifiers for resolving any remaining ambiguities can thus be applied whenever a unique 1:1 mapping between charging requests and arrival notifications/charging stations is not possible.

In this context, the server is preferably configured to identify a charging station as a candidate charging station, if a vehicle has arrived at said charging station but charging of the vehicle has not been enabled. Alternatively, or in addition thereto, the server may be configured to identify a charging station as a candidate charging station, if it is located within a predefined distance from a location of one of the mobile terminals from which said at least one charging request was received. In this manner, a limited number of charging stations can be identified to which the process of conflict resolution based on short, temporary identifiers will be applied.

Finally, the (backend) server may further be configured to authenticate the user; and to transmit, if the user was successfully authenticated, an enabling command to the desired charging station to enable the charging of the arrived vehicle. User authentication, however, may also be performed in a different network entity, such as a separate server or even within the mobile terminal so that the backend server will only notified of the result of the authentication process.

According to a second aspect of the present invention, a method for identifying a desired charging station in a charging system for electric vehicles with a plurality of charging stations is provided. Each charging station comprises a vehicle detector for detecting whether a vehicle has arrived. The method comprising the steps of transmitting an arrival notification from each of the charging stations to a server when the vehicle detector has detected that a vehicle has arrived at the charging station; receiving, at the server, a charging request from a user's mobile terminal indicating that the user intends to use one of the plurality of charging stations; and identifying the desired charging station among the plurality of charging stations on the basis of a temporal correlation between the charging request and the arrival notifications.

In a preferred embodiment, the method further comprises the above mentioned process for resolving remaining ambiguities, namely identifying, if a plurality of charging requests is received from a plurality of mobile terminals and if a unique charging station cannot be identified for at least one of the received charging requests, a plurality of candidate charging stations for said at least one charging request; generating, for each candidate charging station, a temporary identifier that uniquely identifies the respective charging station among the candidate charging stations; transmitting each temporary identifier to the respective candidate charging station; prompting each candidate charging station to display its temporary identifier; and prompting each user who transmitted one of said at least one charging requests to transmit, via the user's mobile terminal, one of said temporary identifiers and identifying the thus identified candidate charging station as the desired charging station for said charging request.

The above and other objects and features of the present invention will become more apparent from the following description and preferred embodiments given in conjunction with the accompanying drawings, in which:
- Fig. 1: is a schematic diagram of a charging system according to the present invention,
- Fig. 2: shows an example of an exchange of protocol messages between a charging station, the backend server, and a user's mobile terminal, and
- Fig. 3: shows another example of an exchange of protocol messages between two charging stations, the backend server, and a user's mobile terminal.

### DETAILED DESCRIPTION

The inventors have realized that a vehicle detector, which is provided in conventional charging stations for detecting whether the station's parking space is occupied, may also be employed for implementing an efficient web-based authentication, authorization and accounting process, i.e., a process for (i) securely identifying the user, (ii) allowing the identified user to receive the desired service, and (iii) accounting for the received service.

The first step of user authentication may be implemented by transmitting user credentials, such as a user name, a user ID, a password, a PIN, etc., from the user's mobile terminal to a server. Any conventional technique or protocol may be employed for this purpose.

The second step of user authorization comprises selectively enabling the correct charging station, i.e., the charging station that the user intends to use for charging their vehicle. In a situation where authentication was performed directly between the user's mobile terminal and a server, i.e., without involvement of the charging station, the server is unaware of what charging station is to be used. Conventional web-based AAA processes thus require the user to transmit additional information on the desired charging station, such as an alpha-numerical identifier that is printed somewhere on the charging station. Each charging station thus needs to be provided with a globally unique identifier and the length of these identifiers increases with the number of deployed charging stations.

In many cases, however, the transmission of a unique identifier can dispensed with if the arrival time of the EV at the charging station is taken into account by the server. Typically, users will park their vehicles at a charging station and take the necessary steps for initiating the charging process within a short time interval of, say, a few seconds or minutes. The temporal correlation between parking the vehicle and issuing a request for charging can be exploited for identifying (or at least limiting the number of possible candidates for) the charging station that is to be associated with the charging request. If such a charging station can be uniquely identified on the basis of said temporal correlation alone, no additional identification information has to be provided by the user.

Once the user has been successfully authenticated and the desired charging station has been uniquely identified, then the second step may be completed by selectively enabling the charging process at the desired charging station. This step may include releasing a mechanical lock at the station's power outlet, switching the power outlet on, starting communication with the vehicle's on-board charging system via the charging cable, etc.

Finally, when the charging process is completed, consumption data is transmitted in the third step from the charging station to the server. Based on the previously established association between user and charging station, the server will charge the correct account with the correct consumption data.

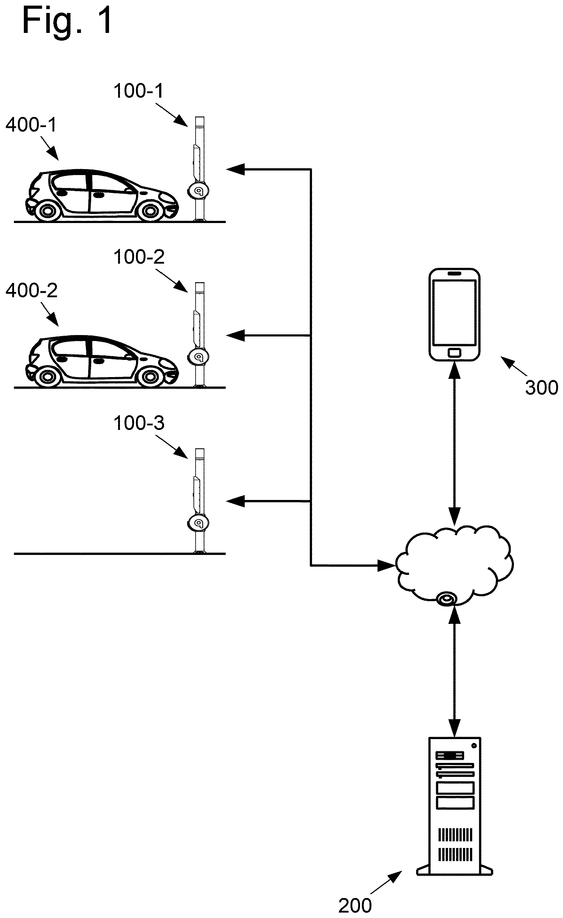

Fig. 1 is a schematic diagram of a charging system according to the present invention. The charging system comprises a plurality of charging stations (100-1, ... , 100-3), which are communicatively coupled with a backend server (200). Associated with each charging station is a parking place on which an EV (400-1, 400-2) can be parked during the charging process. The backend server (200) is further configured to communicate with a mobile terminal (300), such as a smart phone or a board computer installed in a vehicle.

Each charging station basically comprises a power source for providing electric power to the vehicle, a vehicle detector for detecting whether the associated parking place is occupied and a controller for establishing communication with the backend server and for enabling charging of the vehicle with electric power provided by the power source.

The vehicle detector is adapted for detecting whether the parking place of the charging station is occupied by a vehicle and to transmit a signal indicating the detection result to the controller. The connection between the vehicle detector and the controller may be wired or wireless.

The vehicle detector may be based on any suitable technology and may include, but is not limited to, a pressure sensor, a magnetic sensor, a radar sensor, an infrared sensor, or an imaging sensor. Moreover, a sensor that detects the presence or absence of a plug in a power outlet of the charging station or the establishing of an electrical connection between the EV and the charging station may also be used as a vehicle detector for (indirectly) detecting the presence of an EV.

### Temporal Correlation

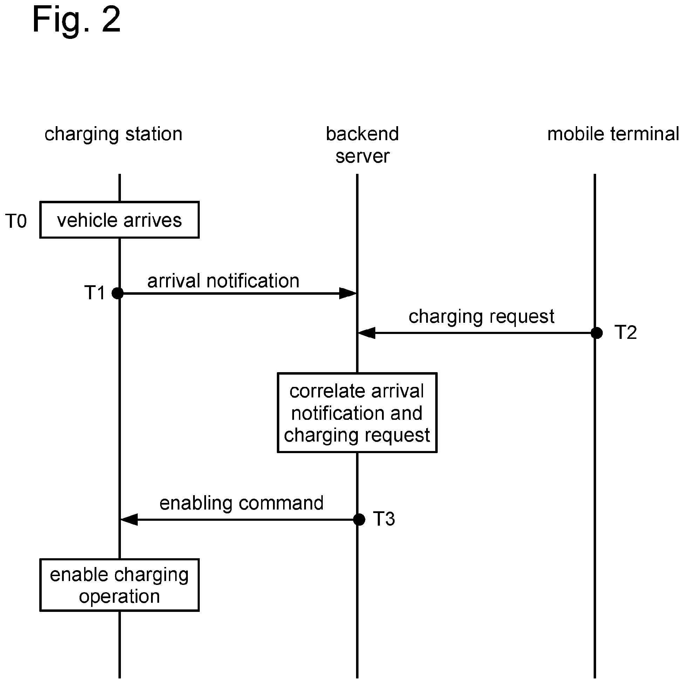

Fig. 2 shows an example of an exchange of protocol messages between a charging station, the backend server, and a user's mobile terminal.

At time T0, a vehicle arrives at the charging station. The arrival of the vehicle is detected by the vehicle detector and an arrival notification is transmitted from the charging station to the backend server at time T1. The arrival notification includes at least address information of the sender to allow the server to identify the charging station at which the vehicle arrived among the plurality of charging stations that are communicatively coupled to said server. The arrival notification may also include a time stamp indicating the time at which the vehicle was detected for the first time.

Shortly after the vehicle arrived, the user transmits, at time T2, a charging request from the mobile terminal to the backend server. This request may be initiated by pressing a button "Charge Now" on an application program running on the user's mobile terminal. The charging request may include information that allows the server to identify the user, such as user credentials, an identifier of the mobile terminal, or session information, etc. The charging request may also include location information that allows the server to roughly localize the user's position, such as GPS information or an identifier of the mobile communication cell to which the mobile terminal is currently connected to. However, the charging request generally does not include identification information of a specific charging station.

Having thus received a charging request from a specific user but without charging station identification information, the server has to determine which charging station the user intends to use. This is achieved by temporarily correlating the arrival notifications with the charging requests received at the backend server.

Here, the term "temporal correlation" is used in a broad sense of "being related in time". Thus, a temporal correlation between two events may exist if said events occur simultaneously, within a predefined time interval, or within a certain temporal distance of each other. Specifically, two events may be temporally correlated if the second event occurs within a specified time window relative to the first event, i.e., not later than x seconds after the first event but not earlier than y seconds before the first event. Note that the time window does not need to be centered around the first event (x and y may be different) and does not even need to include the first event (x or y may be negative).

Referring back to Fig. 2, the backend server has thus received an arrival notification at time T1 and a charging request at time T2, and determines whether said arrival notification and said charging request are temporally correlated, e.g., by determining whether the charging request arrived within a predefined time window relative to the arrival notification, e.g., not later than predefined amount of time after the arrival notification. The predefined amount of time may range from several seconds to a few minutes, such as 30 s, 1 min, 2 min, or 5 min.

Under certain circumstances, the charging request may also arrive at the backend server shortly before the arrival notification, i.e., with a timing opposite to that illustrated in Fig. 2. This situation may occur for instance, if there are delays in the communication between the charging station and the backend server, if the vehicle is only detected with a delay, or if the user transmits the charging request shortly before the vehicle is parked at the charging station. However, even if the charging request arrives before the arrival notification, the backend server can still detect both events as being temporally correlated by setting the time window accordingly. Specifically, the backend server may also consider charging requests that arrived not more than a certain amount of time before the arrival notification. This amount of time may likewise range from several seconds to a few minutes, such as 30 s, 1 min, 2 min, or 5 min.

If the backend server has found that the arrival notification and the charging request are temporally correlated, the user identified by the charging request and the charging station identified by the arrival notification may be associated with each other, i.e., the server may conclude that the user intends to use this specific charging station and allow the user to initiate the charging process by sending an enabling command to the charging station at time T3.

### Conflict resolution

The above approach works fine as long as the time interval between consecutive arrival notifications is sufficiently large. However, a situation is conceivable where two or more vehicles arrive more or less simultaneously at two or more different charging stations, so that respective charging requests cannot be associated with the correct charging station on the basis of the temporal correlation alone.

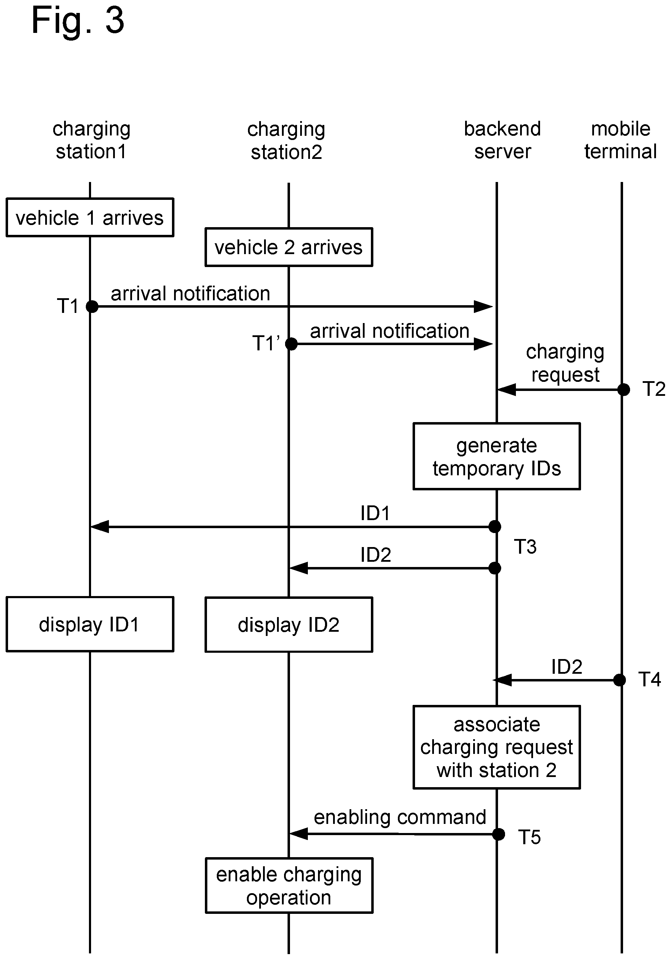

This situation is illustrated in Fig. 3, where two vehicles arrive at two charging stations, which transmit arrival notifications to the backend server at times T1 and T1', respectively. One of the two users transmits a charging request to the backend server at time T2. This charging request, however, cannot be uniquely associated with one of the two charging stations, because it is temporally correlated both with the first arrival notification and the second arrival notification. The same may hold true for a charging request transmitted by the other user (not shown).

In order to resolve this ambiguity, the backend server generates two different, temporary identifiers and transmits same, at time T3, to a respective one of the first and the second charging stations. Each charging station displays its received identifier on a screen so that it is well visible for the user. At the same time, the users are prompted, by the application program on their mobile terminal, to enter the identifier displayed on their desired charging station. The entered identifier is transmitted to the backend server at time T4 in order to allow the charging request to be associated with the correct charging station. Once the charging request has thus been successfully associated with a unique charging station, the charging process may be initiated as described above.

The use of temporary identifiers has the advantage that comparatively short codes can be used, because these codes are created on demand and are only required for discriminating between a very limited number of charging station and, therefore, do not need to be globally unique. Preferably, a code with one, two, three, or four digits, characters, or combinations thereof is used. In a particularly preferred embodiment, a three letter code (3LC) is used, which can easily be entered on a mobile terminal.

The above process for resolving ambiguities may also be applied in any other case, where a one-to-one association between a charging request and a charging station is not possible. For instance, in a situation where a user parks his/her car in front of a charging station but waits too long before he/she issues a charging request via the application program, the backend server is no longer able to identify the desired charging station, because the arrival notification and the charging request are no longer considered to be temporally correlated, i.e., the time window has already closed before the charging request arrived at the backend server. In this case, a temporary code may be generated for, transmitted to, and displayed on all charging stations that are currently occupied but not in use, i.e., charging stations where a vehicle is detected but no charging operation has been initiated. The user will then be prompted to enter the code displayed on the desired charging station in the application program as explained above.

An ambiguity in the association between charging stations and charging request may also arise when the user who has waited too long happens to transmit the charging request just at that moment when another vehicle arrives at another charging station. In this situation, two (or more) charging request may actually be correlated with a single arrival notification. However, the backend server will detect that a unique one-to-one association cannot be determined on the basis of the temporal correlation alone and perform the above process for conflict resolution by generating temporary identification codes for all candidate charging stations, i.e., all charging stations where a vehicle is detected but no charging operation has been initiated.

### Spatial Correlation

Obviously, the likelihood of two vehicles arriving more or less simultaneously at two different charging stations increases with the number of deployed charging stations. For large charging systems with many charging stations distributed over all over a city, a district, or a country, etc., it may thus be beneficial to employ, in addition to the temporal correlation technique, location data of the user's mobile terminal in order to narrow down the number of charging stations that are candidates for being associated with each charging request.

In an embodiment of the present invention, location data indication the location of the user's mobile terminal is thus transmitted together with charging request. The location data may be obtained from a positioning system such as GPS, Galileo, GLONASS, etc., or may be derived from mobility data such as current access points, communication cells, etc. The location data may be transmitted as part of the charging request or in a separate transmission within a common session or linked otherwise to the charging request.

The location data itself may not be sufficiently precise for discriminating between adjacent charging stations, but can be used to tell a first group of charging stations in a first area apart from a second group in another area. Thus, by taking location data into account, temporal correlations have to be analyzed only for either one of these groups and the chance of a "false positive" is reduced accordingly.

Upon receiving a charging request together with location information of a mobile terminal, the backend server may thus refer to a database with position information of each charging station in order to determine a subset of candidate charging stations that are located in the vicinity of the mobile terminal. This subset of candidate charging stations is then used as a basis for identifying arrival notifications that are temporally correlated with the charging request, as explained above in conjunction with Figs. 2 and 3. Arrival notifications from other charging stations will be neglected.

In other words, a spatial correlation between the arrival notification and the charging request is employed in addition to the temporal correlation in order to associate the charging request with the appropriate charging station. Here, "spatial correlation" may refer to any relation between the location of the mobile terminal and the location of the charging station, such as being both located within a common area or being located within a predefined distance from each other. The predefined distance may also be varied depending on circumstances, such as a density of the charging stations deployed in the vicinity of the mobile terminal, a current rate of the incoming charging requests, current traffic conditions, etc. Traffic conditions may be taken into account, for instance, for translating a maximum driving time, such as 3 min, 5 min, etc., into a maximum distance at which charging stations are considered as potentially desired charging stations.

The spatial correlation between the arrival notification and the charging request may also be combined with above described process for resolving ambiguities. For instance, in the situation where a user has waited too long before transmitting a charging request, temporary codes may be generated for and transmitted to only those charging stations that are spatially correlated with the charging request, i.e., to only those charging stations that are located close to the position indicated by the location data.

The above description is mainly focused on electric cars; the present invention, however, is not limited to electric cars but may likewise be applied to other EVs, such as electric bikes, electric scooters, etc.

The present invention thus relates to charging systems for electric vehicles, and in particular to a charging system with a plurality of charging stations connected to a common backend server. Each charging station is provided with a vehicle detector and transmits an arrival notification to the backend server when a vehicle arrives at the charging station. Each user who wants to charge a vehicle, transmits a charging request to the backend server by means of an application program running on a mobile terminal. By correlating the arrival notifications and the charging requests in time, the backend server can associate the charging request to the correct charging station without requiring the user to enter a globally unique identifier of the desired charging station.

## Claims

1. A charging system for electric vehicles with a plurality of charging stations and a server, wherein each charging station comprises
a power source for providing electric power to a vehicle;
a vehicle detector for detecting whether a vehicle has arrived at the charging station; and
a controller configured
to transmit an arrival notification to the server when the vehicle detector has detected that a vehicle has arrived at the charging station, and
to enable charging of the vehicle with electric power provided by the power source in response to an enabling command received from the server; and
wherein the server is configured
to receive arrival notifications from the plurality of charging stations indicating that a vehicle has arrived at the respective charging station;
to receive a charging request from a user's mobile terminal indicating that the user intends to use one of the plurality of charging stations;
to identify a desired charging station among the plurality of charging stations on the basis of a temporal correlation between receiving the charging request and receiving the arrival notifications; and
to enable charging of the arrived vehicle at the desired charging station.

2. The charging system according to claim 1, wherein the server is configured to identify the desired charging station on the basis of the temporal correlation by identifying a charging station as the desired charging station, if said charging station has transmitted an arrival notification within a predefined time window relative to a point in time at which the charging request was received.

3. The charging system according to any of the preceding claims, wherein the server is further configured
to receive location information from the user's mobile terminal;
to store location information indicating a location of each charging station; and
to identify the desired charging station among the plurality of charging stations on the basis of said temporal correlation and on the basis of a spatial correlation between the received location information and the stored location information.

4. The charging system according to claim 3, wherein the server is configured to identify the desired charging station on the basis of the spatial correlation by identifying a charging station as the desired charging station if said charging station is located within a predefined distance from a location indicated by the received location information.

5. The charging system according to claim 3 or 4, wherein the server is configured to identify the desired charging station on the basis of the spatial correlation by ignoring arrival notifications received from charging stations that are located at a location that is not spatially correlated with the location indicated by the received location information.

6. The charging system according to any of the preceding claims, wherein the server is further configured
to identify one or more candidate charging stations on the basis of a temporal correlation between receiving the charging request and receiving the arrival notifications;
to identify, if exactly one candidate charging station has been determined, the candidate charging station as the desired charging station; and
if more than one candidate charging stations have been determined, to prompt the user to transmit, via the user's mobile terminal, an identifier of a charging station and to identify the thus identified charging station as the desired charging station.

7. The charging system according to claim 6, wherein the server is further configured
to generate, for each candidate charging station, a temporary identifier that uniquely identifies the respective charging station among the candidate charging stations;
to transmit each temporary identifier to the respective candidate charging station;
to prompt each candidate charging station to display its temporary identifier;
wherein the desired charging station is identified on the basis of its temporary identifier.

8. The charging system according to any of claims 1 to 5, wherein the server is further configured to receive charging requests from a plurality of mobile terminals and to identify a desired charging station for each of the received charging requests,
wherein, if a unique charging station cannot be identified for at least one of the charging requests, the server is further configured
to identify a plurality of candidate charging stations for said at least one charging request,
to generate, for each candidate charging station, a temporary identifier that uniquely identifies the respective charging station among the candidate charging stations,
to transmit each temporary identifier to the respective candidate charging station,
to prompt each candidate charging station to display its temporary identifier,
to prompt each user who transmitted one of said at least one charging requests to transmit, via the user's mobile terminal, one of said temporary identifiers and to identify the thus identified candidate charging station as the desired charging station for said charging request.

9. The charging system according to claim 8, wherein the server is configured to identify a charging station as a candidate charging station, if a vehicle has arrived at said charging station but charging of the vehicle has not been enabled.

10. The charging system according to claim 8 or 9, wherein the server is configured to identify a charging station as a candidate charging station, if it is located within a predefined distance from a location of one of the mobile terminals from which said at least one charging request was received.

11. The charging system according to any of the preceding claims, wherein the server is further configured
to authenticate the user; and
to transmit, if the user was successfully authenticated, an enabling command to the desired charging station to enable the charging of the arrived vehicle.

12. A method for identifying a desired charging station in a charging system for electric vehicles with a plurality of charging stations, wherein each charging station comprises a vehicle detector for detecting whether a vehicle has arrived, said method comprising the steps of
transmitting an arrival notification from each of the charging stations to a server when the vehicle detector has detected that a vehicle has arrived at the charging station;
receiving, at the server, a charging request from a user's mobile terminal indicating that the user intends to use one of the plurality of charging stations; and
identifying the desired charging station among the plurality of charging stations on the basis of a temporal correlation between the charging request and the arrival notifications.

13. The method according to claim 12, further comprising:
identifying, if a plurality of charging requests is received from a plurality of mobile terminals and if a unique charging station cannot be identified for at least one of the received charging requests, a plurality of candidate charging stations for said at least one charging request,
generating, for each candidate charging station, a temporary identifier that uniquely identifies the respective charging station among the candidate charging stations,
transmitting each temporary identifier to the respective candidate charging station,
prompting each candidate charging station to display its temporary identifier, and
prompting each user who transmitted one of said at least one charging requests to transmit, via the user's mobile terminal, one of said temporary identifiers and identifying the thus identified candidate charging station as the desired charging station for said charging request.
